# EUROPÄISCHE PATENTSCHRIFT

(11) **EP 2 710 927 B1**
(45) Veröffentlichungstag und Bekanntmachung des Hinweises auf die Patenterteilung: **06.08.2014**
(21) Anmeldenummer: 12006608.9
(22) Anmeldetag: 20.09.2012
(51) Int. Cl.: A47C 7/00, B60B 33/06

(54) **Fuss, insbesondere Möbelfuss**
Foot, in particular furniture foot
Pied, en particulier pied de meuble

(43) Veröffentlichungstag der Anmeldung: 26.03.2014
(73) Patentinhaber: Polinova Polstermöbel GmbH & Co. KG, 31603 Diepenau (DE)
(72) Erfinder: Regehr, Heinrich, 32339 Espelkamp (DE); Armbruster, Markus, 77948 Friesenheim-Heiligenzell (DE); Beer, Marius, 81927 München (DE)
(74) Vertreter: Schober, Mirko

(56) Entgegenhaltungen:
- JP-A- 4 208 106
- US-A1- 2002 144 846
- US-A1- 2010 126 744

## Beschreibung

Die Erfindung betrifft einen Fuß, insbesondere einen Möbelfuß, nach dem Oberbegriff des Anspruchs 1.

Insbesondere bei schwereren Möbeln, etwa Polstermöbeln mit einem Fuß, insbesondere einem Rundfuß, ist es oftmals beschwerlich, das Möbel aufgrund des Eigengewichts zu verschieben. Es ist zwar prinzipiell möglich, feste Rollen unter dem Fuß vorzusehen, jedoch soll das entsprechende Möbelstück beim Gebrauch gerade nicht verschoben werden.

Aus AT 296533 ist ein Fuß bzw. Fußgestell der gattungsgemäßen Art bekannt. Das Fußgestell weist Rollen auf, mit denen es über den Aufstellboden gerollt werden kann. Um ein Eindrücken der Rollen in den Boden zu verhindern, kann eine Platte in Richtung des Bodens abgesenkt werden, so dass die Auflagefläche vergrößert wird.

Dieser Mechanismus ist nachteilig, weil zum Anheben bzw. Absenken der Platte eine bestimmte Bauhöhe des Fuβes erforderlich ist, um die entsprechende Mechanik darin unterzubringen. Dies hat Einfluss auf die Gestaltungsmöglichkeiten des Fußes.

Ein gattungsgemäßer Möbelfuß ist z.B. aus JP 4 208106 A bekannt. Dieser Fuß weist ausklappbare Rollen auf, welche über ein Schwenkelement aus dem Boden ausgestellt werden und das Schwenkelement bzw. die ausgestellten Rollen in einer Totlage gehalten wird/werden, durch welche die Rollen in der Ausstellposition fixiert werden. Auch dieser Mechanismus ist nachteilig, weil das Schwenkelement um eine Achse parallel zum Boden verschraubt wird und so zur Ausführung der Bewegung eine bestimmte Bauhöhe des Fußes erforderlich ist.

Aufgabe der vorliegenden Erfindung ist es, einen gattungsgemäßen Fuß anzugeben, welcher in dieser Hinsicht verbessert ist und einerseits das einfache Verschieben des Fußes und andererseits Standsicherheit bei möglichst geringer Bauhöhe gewährleistet.

Gelöst wird diese Aufgabe durch einen Fuß, insbesondere einen Möbelfuß, mit den Merkmalen des Anspruchs 1, vorteilhafte Ausführungsformen finden sich in den Unteransprüchen.

Der erfindungsgemäße Fuß weist auf seiner Bodenseite eine Mehrzahl Rollen auf, wobei die Rollen aus dem Fuß ausstellbar ausgebildet sind. Dabei ist eine Betätigungseinrichtung vorgesehen, durch deren Betätigung die Rollen aus einer Verstaustellung in eine Gebrauchsstellung oder aus der Gebrauchsstellung in die Verstaustellung überführbar sind. Durch die Ausstellbarkeit der Rollen über die Betätigungseinrichtung wird der Fuß und damit das zugehörige Möbelstück für das Verlagern desselben mobil. Am Aufstellort können die Rollen wieder eingefahren werden, so dass das Möbelstück während der Benutzung sicher auf dem Fuß steht und nicht verrutschen kann.

Diee Rollen sind dabei mit ausstellbaren, am Fuß angelenkten Hebeln verbunden, so dass das Ausstellen der Rollen über das Verschwenken der Hebel realisiert wird. Alternativ können die Rollen auch durch lineares Ausfahren ausgestellt werden. Die Hebel sind dabei insbesondere mit der Betätigungseinrichtung gekoppelt. Zur Kopplung dient dabei pro Hebel wenigstens eine Übertragungseinrichtung, die insbesondere Hebel und/oder Bowdenzüge und/oder Getriebe umfassen kann.

Die Betätigungseinrichtung kann insbesondere auch einen Antriebsmotor umfassen, welcher im Fuß oder auch in dem dazu gehörigen Möbelstück vorgesehen ist.

Weiter sind die Hebel so ausgebildet, dass sie beim Übergang in die Verstaustellung aufeinander zu und beim Übergang in die Gebrauchsstellung voneinander weg verschwenkt werden. Grundsätzlich ist es aber auch möglich, dass die Bewegung der Hebel genau umgekehrt erfolgt. Auf diese Weise können die Hebel vorteilhaft mit lediglich einer Übertragungseinrichtung gekoppelt werden. Diese ist insbesondere zwischen den Hebeln angeordnet. Die Kopplung zwischen den Hebeln ist dabei so ausgeführt, dass die Übertragungseinrichtung in der Gebrauchsstellung mit den ausgestellten Rollen die Hebel am Verschwenken hindert. Diese Arretierung kann insbesondere in Form einer Selbsthemmung eines Getriebes vorgesehen sein, wenn die Übertragungseinrichtung ein Getriebe umfasst oder die Betätigungseinrichtung einen Getriebemotor mit selbsthemmendem Getriebe aufweist.

Dabei ist vorgesehen, dass die Übertragungseinrichtung ein mit dem ersten Hebel gelenkig verbundenes erstes Schub- und Zugelement und ein mit dem zweiten Hebel gelenkig verbundenes zweites Schub- und Zugelement aufweist. Dabei kann insbesondere vorgesehen sein, dass das erste und das zweite Schub- und Zugelement über wenigstens ein mit der Betätigungseinrichtung zusammenwirkendes Kopplungselement gelenkig miteinander verbunden sind. In der Gebrauchsstellung ist es so möglich, dass die Schub- und Zugelemente, das Kopplungselement und die Hebel eine Totlage einnehmen, so dass ein Zurückschwenken in die Gebrauchsstellung ohne weiteres Betätigen der Betätigungseinrichtung nicht möglich ist. Eine Mehrzahl erste Hebel können insbesondere auch über eine gemeinsame Verbindungsstange miteinander verbunden sein.

Der erfindungsgemäße Fuß kann insbesondere für ein Möbelstück eingesetzt werden, wobei dann die Betätigungseinrichtung bevorzugt durch Bewegen, insbesondere Drehen oder Verschieben, eines oder einer Mehrzahl Teile des Sitzmöbelstücks betätigbar ist.

Die Erfindung wird nachfolgend anhand der Figuren 1 bis 6B näher erläutert. Auch wenn nachfolgend die Erfindung nur an zwei konkreten Ausführungsbeispielen erläutert wird, so lassen sich einzelne Bauteile und Merkmale beider Ausführungsformen miteinander beliebig kombinieren.

Figur 1 zeigt eine perspektivische Draufsicht auf eine erste nicht erfindungsgemäße Ausführungsform des Fußes.

Figur 2 zeigt eine perspektivische und eine seitliche Ansicht auf die Betätigungseinrichtung und die Ausstellmechanik des nicht erfindungsgemäßen Fußes nach der ersten Ausführungsform in der Verstaustellung.

Figur 3 zeigt eine perspektivische und eine seitliche Ansicht auf die Betätigungseinrichtung und die Ausstellmechanik des nicht erfindungsgemäßen Fußes nach der ersten Ausführungsform in der Gebrauchsstellung.

Figur 4 zeigt eine Seitenansicht auf die nicht erfindungsgemäße Betätigungseinrichtung nach der ersten Ausführungsform.

Figur 5A zeigt eine Bodenansicht und eine Seitenansicht einer erfindungsgemäßen Ausführungsform des Fußes in der Verstaustellung.

Figur 5B zeigt die Ausstellmechanik erfindungsgemäßen Fußes in der Verstaustellung.

Figur 6A zeigt eine Bodenansicht und eine Seitenansicht des erfindungsgemäßen Fußes in der Gebrauchsstellung.

Figur 6B zeigt die Ausstellmechanik erfindungsgemäßen Fußes in der Gebrauchsstellung.

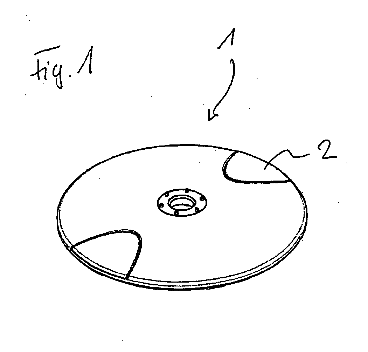

Die in den Figuren 1 bis 4 gezeigte erste Ausführungsform wird gebildet durch einen Fuß 1, der im gezeigten Beispiel eine (nicht notwendigerweise) etwa kreisförmige Grundfläche aufweist und dessen dem Boden abgewandte Oberseite in der Figur 1 dargestellt ist. In der Oberseite sind im gezeigten Beispiel zwei Betätigungselemente 2 an diametral gegenüberliegenden Seiten des Fußes 1 vorgesehen. Auch Ausführungen mit lediglich einem Betätigungselement 2 sind denkbar.

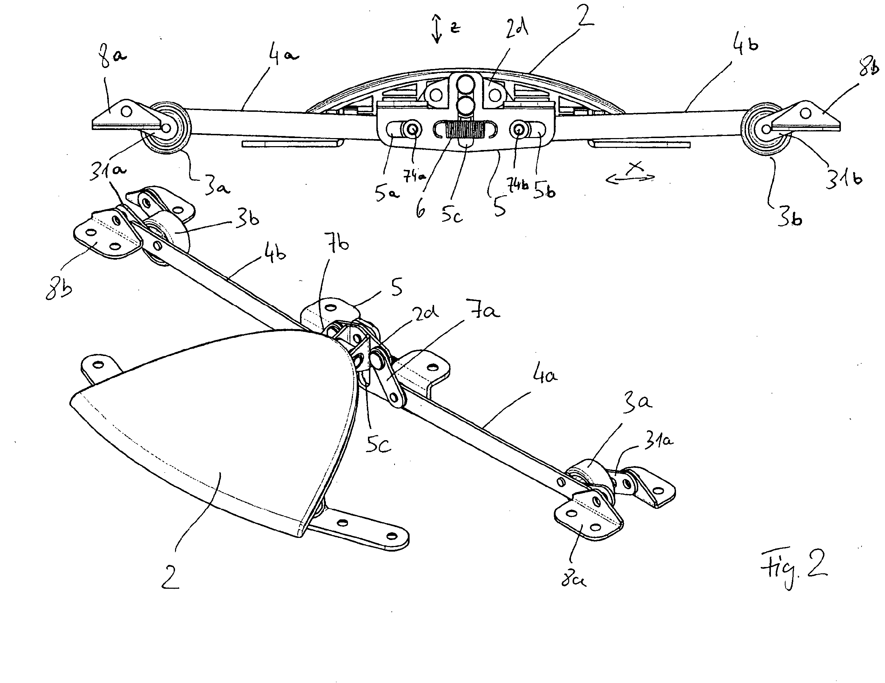

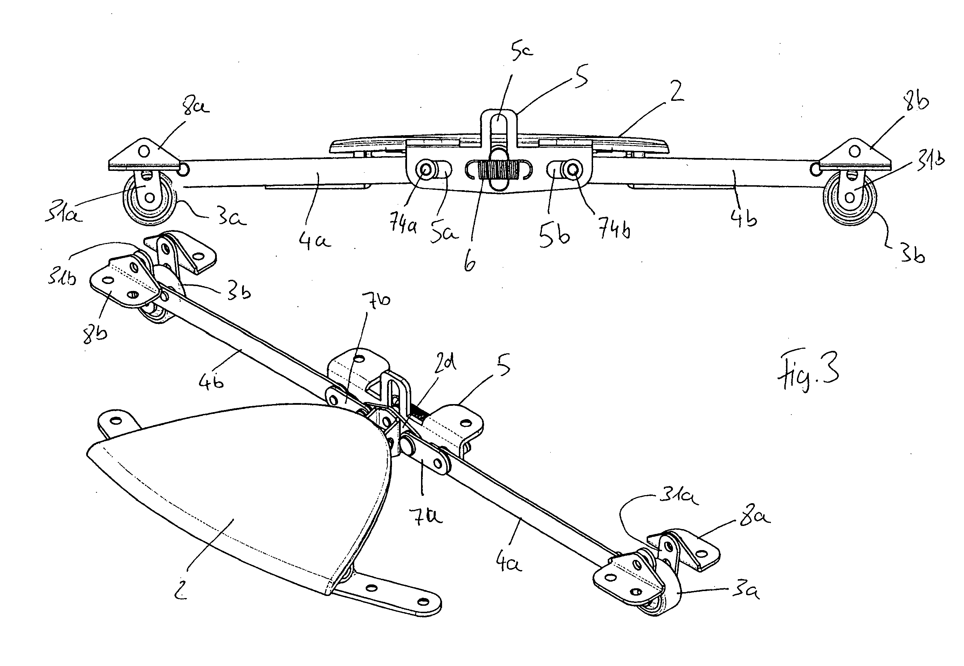

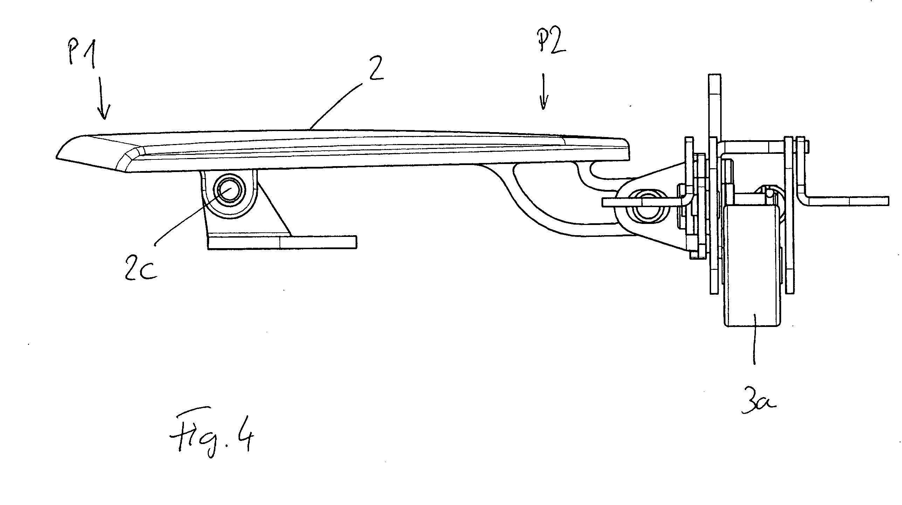

Das am Fuß 1 um ein Schwenklager 2c schwenkbeweglich gelagerte Betätigungselement 2, welches in Figur 4 genauer gezeigt ist, kann durch Druck im Bereich und in Richtung des Pfeils P1 in die in Figur 2 gezeigte Verstaustellung und aus der Verstaustellung durch Druck im Bereich und in Richtung des Pfeils P2 in die in Figur 3 gezeigte Gebrauchsstellung verbracht werden. Verstaustellung bedeutet generell, dass die Rollen 3a, 3b im Boden des Fußes 1 eingefahren sind, während Gebrauchsstellung bedeutet, dass die Rollen 3a, 3b aus dem Boden des Fußes ausgestellt sind und der Fuß 1 (und das daran nicht gezeigte befestigte Möbelstück) rollend über den Boden bewegt werden kann.

Die Funktionsweise der ersten Ausführungsform wird nun anhand der Figuren 2 und 3 näher erläutert. Die Rollen 3a, 3b sind drehbeweglich am Ende von zugehörigen Hebeln 31a, 31b gelagert. Die Hebel 31a, 31b selbst sind wiederum mit ihren anderen Enden an Lagerbeschlägen 8a, 8b angelenkt, welche wiederum am Fuß (nicht gezeigt) befestigt sind. Durch Verschwenken der Hebel 31a, 31b werden die Rollen 3a, 3b ausgestellt bzw. eingefahren. Zwischen dem Rollenlager und dem Anlenkpunkt am Lagerbeschlag sind an den Hebeln 31a, 31b Übertragungselemente (die hier als Schub- und Zugelemente ausgebildet sind, aber auch Zahnstangen oder Bowdenzüge sein können) 4a, 4b angelenkt, deren den Hebeln 31a, 31b abgewandte Enden gelenkig mit Lenkern 7a, 7b verbunden sind. Diese Lenker 7a, 7b sind wiederum jeweils mit einem zu dem Betätigungselement 2 gehörenden Betätigungsbeschlag 2d gelenkig verbunden und ihre Gelenke sind in einem fußfesten Lagerbeschlag 5 geführt: die Anlenkachsen bzw. Gelenke 74a, 74b zwischen Lenker 7a, 7b und Übertragungselementen 4a, 4b sind in am Lagerbeschlag 5 vorgesehenen horizontalen Führungen 5a, 5b in Richtung X verschieblich geführt, während der Betätigungsbeschlag 2d in einer Vertikalführung 5c in Richtung Z verschieblich geführt ist.

Zum Ausstellen der Rollen 3a, 3b wird das Betätigungselement 2 im Bereich und in Richtung des Pfeils P2 gedrückt (z.B. mit dem Fuß), vgl. Figur 4. Das Betätigungselement 2 verschwenkt um das Schwenklager 2c und nimmt den Betätigungsbeschlag 2d mit, indem dieser in der Zeichnung 2 in Richtung des Bodens nach unten bewegt wird. Durch die Kopplung mit den Lenkern 7a, 7b, werden diese mitgenommen und in Horizontalstellung verlagert, wobei sich die Gelenke 74a, 74b in Horizontalrichtung X voneinander weg bewegen. Dadurch werden in derselben Richtung auch die Übertragungselemente 4a, 4b in Horizontalrichtung X voneinander weg bewegt und verschwenken damit die mit ihnen gekoppelten Hebel 31a, 31b so, dass diese mit den Rollen 3a, 3b aus dem Boden ausgestellt werden. In der Endstellung (vgl. Figur 3) bilden der Betätigungsbeschlag 2d, die Lenker 7a, 7b und die Übertragungselemente 4a, 4b eine Linie, so dass sie eine Totstellung einnehmen und ein unbeabsichtigtes Zurückschwenken der Hebel 31a, 31b nicht möglich ist. Die Anordnung ist dann in der in Figur 3 gezeigten Gebrauchsstellung arretiert. Beim Ausstellen wird zudem eine Rückholfeder 6, welche mit den Lenkern 7a, 7b gekoppelt ist, vorgespannt, die das Verbringen der Anordnung in die Verstaustellung unterstützt.

Dazu wird ausgehend von der Gebrauchsstellung in Figur 3 das Betätigungselement 2 im Bereich in Richtung des Pfeils P1 gedrückt, so dass der Betätigungsbeschlag 2d in der Führung 5c vom Boden weg nach oben wandert und die Lenker 7a, 7b in den Führungen 5a, 5b aus der Totstellung federunterstützt zurückzieht, wodurch die Gelenke 74a, 74b und damit die Übertragungselemente 4a, 4b aufeinander zu bewegt werden. Hierdurch werden die Hebel 31a, 31b aufeinander zu verschwenkt und die Rollen 3a, 3b in die Verstaustellung in Richtung der Oberseite des Fußes verschwenkt.

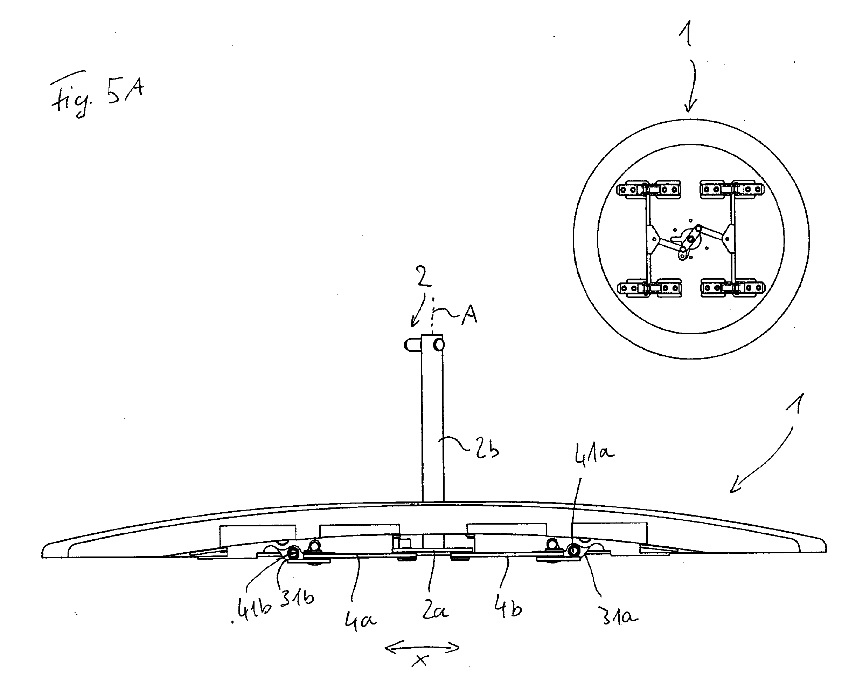

Bei der in den Figuren 5A bis 6B gezeigten Ausführungsform dient zur Betätigung ein drehbares Betätigungselement 2, dieses kann bei einem Drehsessel beispielsweise durch Mitnahme durch das drehende Sitzteil betätigt werden. Die Drehbewegung um die Achse A wird erfindungsgemäß in das Ausstellen bzw. Einfahren der Rollen 3a, 3b bzw. der zugehörigen Hebel 31a, 31b umgesetzt.

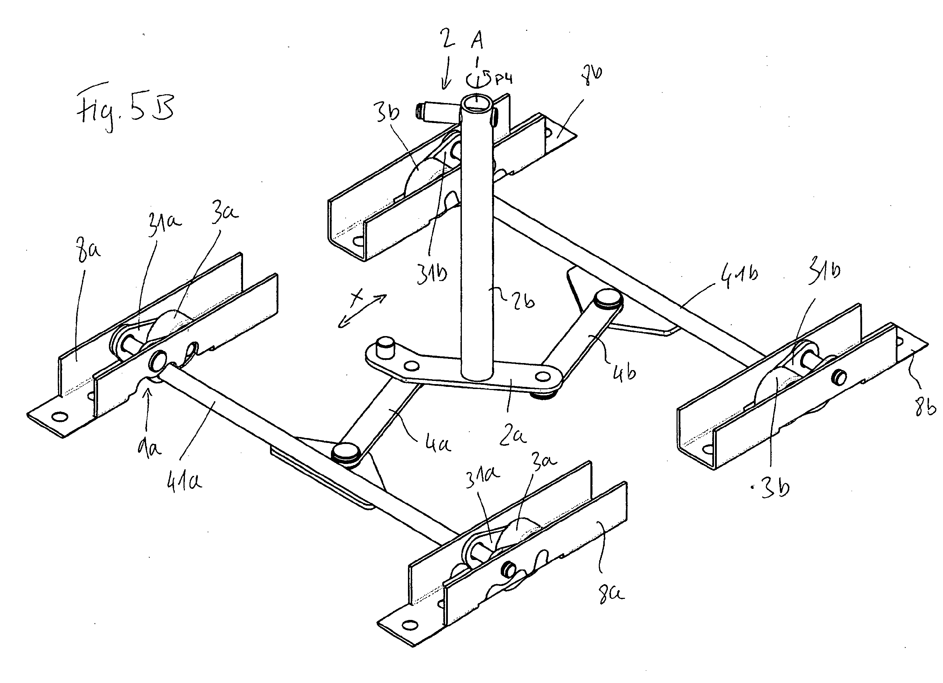

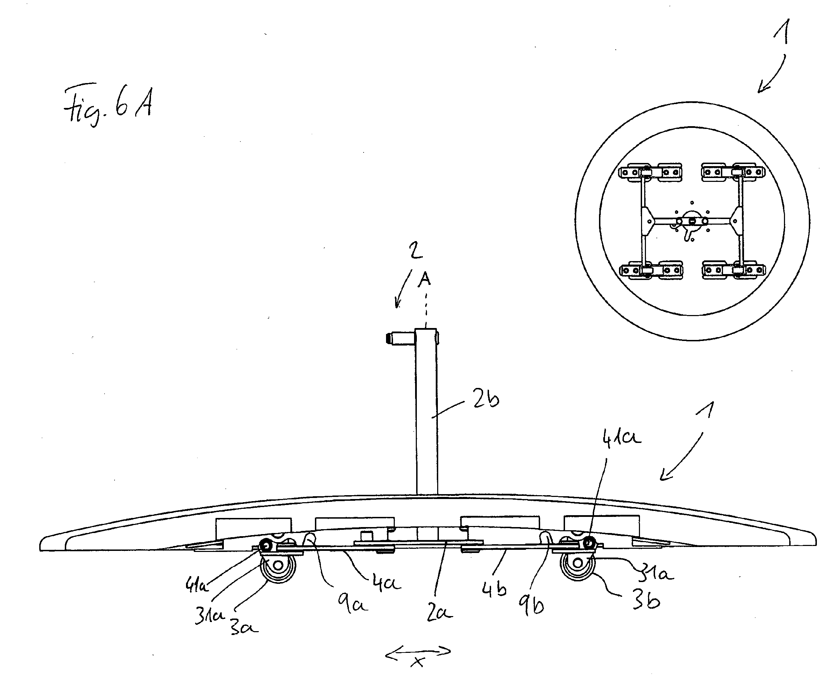

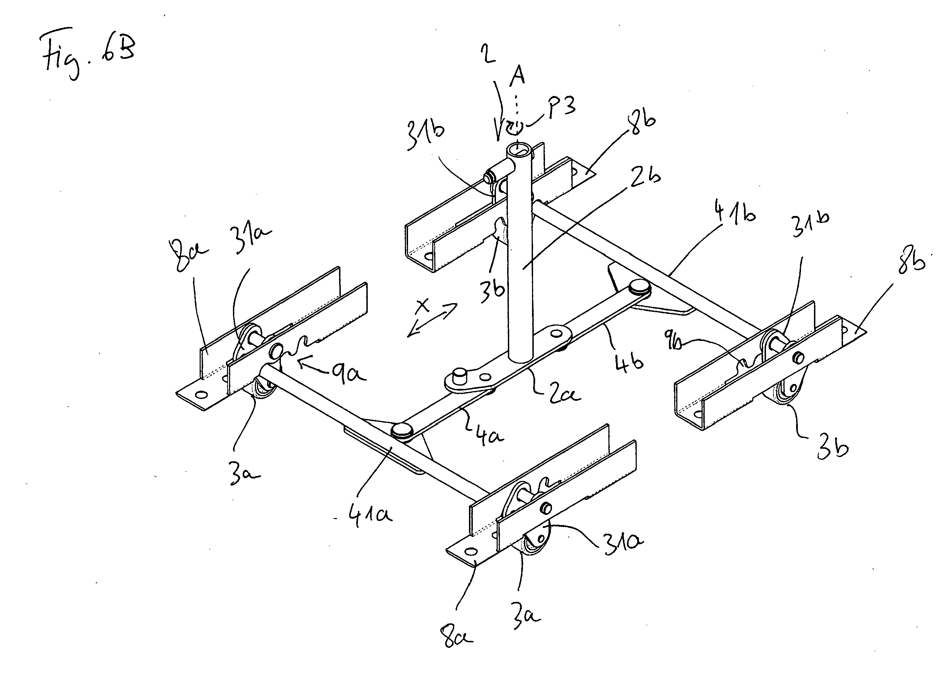

Die Figuren 5A, 5B zeigen die Verstaustellung, die Rollen 3a, 3b sind im gezeigten Beispiel jeweils paarweise vorgesehen und an entsprechenden Hebeln 31a, 31b drehbar gelagert. Die Hebel 31a, 31b sind gelenkig mit entsprechenden Beschlägen 8a, 8b verbunden, die fußfest angeordnet sind. Die Rollenpaare 3a und 3b bzw. die Hebel 31a, 31b sind jeweils über Kopplungsstangen 41a bzw. 41b miteinander verbunden, wobei die Kopplungsstangen 41a, 41b drehbeweglich an den Hebeln 31a, 31b angebracht sind. Jede Kopplungsstange 41a, 41b ist wiederum gelenkig mit einem hier als Lenker ausgebildeten Übertragungselement 4a, 4b verbunden. Die Übertragungselemente 4a, 4b sind mit der Betätigungseinrichtung 2 verbunden. Im gezeigten Beispiel weist die Drehstange 2b, an der die Betätigungseinrichtung 2 wirkt, eine Koppel 2a auf, die gelenkig mit den beiden Übertragungselementen 4a, 4b verbunden ist. Wird bei Betätigung die Stange 2b aus der in Figur 6A, 6B gezeigten Gebrauchsstellung um die Achse A in Richtung des Pfeils P3 gedreht, so wird auch die Koppel 2a gedreht und lenkt die Übertragungselemente 4a, 4b aus. Dadurch werden die Übertragungselemente 4a, 4b und damit auch die Kopplungsstangen 41a, 41b in horizontaler Richtung X auf einander zu bewegt. Das gleiche gilt für die mit den Kopplungsstangen 41a, 41b gekoppelten Hebel 31a, 31b, die aufeinander zu geschwenkt werden und die Rollen 3a, 3b in die Verstaustellung überführen. Man erhält die in den Figuren 5A, 5B gezeigte Situation.

Wird aus der in den Figuren 5A, 5B gezeigten Verstaustellung die Stange 2b durch Betätigung der Betätigungseinrichtung 2 in die entsprechend entgegengesetzte Richtung P4 bewegt, bewegen sich entsprechend alle Elemente in entgegengesetzter Richtung. Insbesondere bewegen sich die Kopplungsstangen 41a, 41b in Horizontalrichtung X voneinander weg, die Hebel 31a, 31b verschwenken voneinander weg. Wie in Figur 6B zu sehen, bilden die Lenker 4a, 4b und die Koppel 2a in der Gebrauchsstellung eine Linie, so dass sich wiederum eine diese Stellung arretierende Totstellung ergibt, die ein sicheres Verschieben des Fußes möglich macht.

## Patentansprüche

1. Fuß (1), insbesondere Möbelfuß, mit einer auf der Bodenseite des Fußes angeordneten Mehrzahl Rollen (3a, 3b), wobei die Mehrzahl Rollen (3a, 3b) aus dem Fuß (1) ausstellbar ausgebildet sind, wobei weiter eine Betätigungseinrichtung (2) vorgesehen ist, durch deren Betätigung die Rollen (3a, 3b) aus einer Verstaustellung in eine Gebrauchsstellung oder aus der Gebrauchsstellung in die Verstaustellung überführbar sind, wobei die Rollen (3a, 3b) an am Fuß (1) angelenkten Hebeln (31a, 31b) angebracht sind, so dass die Rollen durch Verschwenken der Hebel (31a, 31b) ausgestellt werden können, wobei die Hebel (31a, 31b) mit der Betätigungseinrichtung (2) jeweils über wenigstens eine Übertragungseinrichtung (4a, 4b; 7a, 7b; 41a, 41b) gekoppelt sind, wobei die Hebel (31a, 31b) so ausgebildet sind, dass sie beim Übergang in die Verstaustellung aufeinander zu und beim Übergang in die Gebrauchsstellung voneinander weg verschwenkt werden oder dass die Hebel (31a, 31b) so ausgebildet sind, dass sie beim Übergang in die Verstaustellung voneinander weg und beim Übergang in die Gebrauchsstellung aufeinander zu bewegt werden, wobei zwischen den Hebeln (31a, 31b) die Übertragungseinrichtung angeordnet und so mit den Hebeln (31a, 31b) gekoppelt ist, dass sie die Hebel (31a, 31b) in der Gebrauchsstellung am Verschwenken hindert, wobei die Übertragungseinrichtung ein mit dem ersten Hebel (31a) gelenkig verbundenes erstes Schub- und Zugelement (4a) und ein mit dem zweiten Hebel (31b) gelenkig verbundenes zweites Schub- und Zugelement (4b) aufweist,
**dadurch gekennzeichnet,**
**dass** die Rollen (3a, 3b) paarweise vorgesehen sind und die zu den Rollenpaaren (3a, 3b) gehörenden Hebel (31a, 31b) jeweils über Kopplungsstangen (41a, 41b) miteinander verbunden sind, welche drehbeweglich an den Hebeln angebracht sind, wobei eine der Kopplungsstangen (41a) mit dem ersten Schub- und Zugelement (4a) und die andere Kopplungsstange (41b) mit dem zweiten Schub- und Zugelement gelenkig verbunden ist.

2. Fuß (1) nach Anspruch 1,
**dadurch gekennzeichnet,**
**dass** die Übertragungseinrichtung wenigstens einen Übertragungshebel (4a, 4b; 7a, 7b) oder/und ein Getriebe oder/und einen Bowdenzug umfasst.

3. Fuß (1) nach einem der vorigen Ansprüche,
**dadurch gekennzeichnet,**
**dass** die Betätigungseinrichtung (2) einen Antriebsmotor umfasst.

4. Sitzmöbelstück mit einem Fuß (1) nach einem der vorigen Ansprüche.

5. Sitzmöbelstück nach Anspruch 4,
**dadurch gekennzeichnet,**
**dass** die Betätigungseinrichtung (2) durch Bewegen, insbesondere Drehen oder Verschieben, eines oder eine Mehrzahl Teile des Sitzmöbelstücks betätigbar ist.

## Claims

1. Foot (1), more particularly a furniture foot, with a plurality of rollers (3a, 3b) arranged on the floor side of the foot, wherein the plurality of rollers (3a, 3b) are designed to extend out of the foot (1), wherein furthermore an actuating device (2) is provided which when actuated causes the rollers (3a, 3b) to move from a stowage position into a useful position or from the useful position into the stowage position, wherein the rollers (3a, 3b) are attached to levers (31 a, 31 b) connected for articulated movement to the foot (1) so that by swivelling the levers (31 a, 31 b) the rollers can be extended, wherein the levers (31 a, 31 b) are each coupled to the actuating device (2) by at least one transmission device (4a, 4b; 7a, 7b; 41 a, 41b), wherein the levers (31 a, 31 b) are designed so that during the change-over into the stowage position they are swivelled up to one another and during the change-over into the useful position they are swivelled away from one another, or that the levers (31 a, 31 b) are designed so that during the change-over into the stowage position they are moved away from one another and during the change-over into the useful position they are moved up to one another, wherein the transmission device is arranged between the levers (31 a, 31 b) and is coupled to the levers (31a, 31 b) so that it prevents the levers (31 a, 31 b) from swivelling in the useful position, wherein the transmission device has a first push and pull element (4a) which is connected for articulated movement to the first lever (31a), and a second push and pull element (4b) which is connected for articulated movement to the second lever (31 b),
**characterised in that** the rollers (3a, 3b) are provided in pairs and the levers (31a, 31b) belonging to the pairs of rollers (3a, 3b) are each connected together by coupling rods (41 a, 41 b), which are attached for rotational movement to the levers wherein one of the coupling rods (41 a) is connected for articulated movement to the first push and pull element (4a), and the other coupling rod (41b) is connected for articulated movement to the second push and pull element.

2. Foot (1) according to claim 1 **characterised in that** the transmission device comprises at least one transmission lever (4a, 4b; 7a, 7b) and/or one gearing or /and a Bowden cable.

3. Foot (1) according to one of the preceding claims, **characterised in that** the actuating device comprises a drive motor.

4. Article of seating with a foot (1) according to one of the preceding claims.

5. Article of seating according to claim 4 **characterised in that** the actuating device (2) can be actuated by moving, more particularly rotating or sliding, one or more parts of the seating article.

## Revendications

1. Pied (1), en particulier pied de meuble, avec plusieurs roulettes (3a, 3b) qui sont disposées sur le côté du pied orienté vers le sol, sachant que lesdites plusieurs roulettes (3a, 3b) sont conçues de sorte qu'elles puissent être extraites du pied (1), sachant de plus qu'est prévu un dispositif d'actionnement (2) au moyen duquel les roulettes (3a, 3b) peuvent passer d'une position d'escamotage à une position de service, les roulettes (3a, 3b) étant montées sur des leviers (31a, 31b) qui sont articulés sur le pied (1) de telle manière que lesdits roulettes (3a, 3b) puissent être extraits par pivotement des leviers (31a, 31b), les leviers (31a, 31b) étant, chacun, couplés avec le dispositif d'actionnement (2) par l'intermédiaire d'au moins un dispositif de transmission (4a, 4b ; 7a, 7b ; 41a. 41b), sachant que les leviers (31a, 31b) sont conçus de sorte qu'ils soient pivotés les uns vers le autres lors du passage en position d'escamotage et pivotés les uns à l'opposé des autres lors du passage en position de service ou que lesdits leviers (31a, 31b) sont conçus de sorte qu'ils soient pivotés les uns à l'opposé des autres lors du passage en position d'escamotage et pivotés les uns vers les autres lors du passage en position de service, le dispositif de transmission étant disposé entre les leviers (31a, 31b) et ainsi couplé avec lesdits leviers (31a, 31b) de sorte que, dans la position de service, ils empêchent les leviers (31a, 31b) de pivoter, sachant que le dispositif de transmission présente un premier élément de poussée et de traction (4a), qui est relié, de manière articulée, au premier levier (31a), et un deuxième élément de poussée et de traction (4b), qui est relié, de manière articulée, au deuxième levier (31b).
**caractérisé en ce que**
les roulettes (3a, 3b) sont prévues par paires et que les leviers (31a, 31b) associés aux paires de roulettes (3a, 3b) sont respectivement reliés ensemble par l'intermédiaire de barres de couplage (41a, 41b) qui sont montées, mobiles en rotation, sur les leviers, l'une des barres de couplage (41a) étant reliée, de manière articulée, au premier élément de poussée et de traction (4a) et l'autre barres de couplage (41b) étant reliée, de manière articulée, au deuxième élément de poussée et de traction.

2. Pied (1) selon la revendication 1,
**caractérisé en ce que**
le dispositif de transmission comprend au moins un levier de transmission (4a, 4b; 7a, 7b) ou / et un engrenage ou / et un câble Bowden.

3. Pied (1) selon l'une des revendications précédentes,
**caractérisé en ce que**
le dispositif d'actionnement (2) comprend un moteur de commande.

4. Meuble siège avec un pied (1) selon l'une des revendications précédentes.

5. Meuble siège selon la revendication 4,
**caractérisé en ce que**
le dispositif d'actionnement (2) peut être activé par déplacement, en particulier par rotation ou poussée, de l'une ou de plusieurs des pièces du meuble siège.
